(19) 

**Europäisches Patentamt**
**European Patent Office**
**Office européen des brevets**

(11) **EP 3 081 548 A1**

(12) 

# EUROPEAN PATENT APPLICATION
published in accordance with Art. 153(4) EPC

(43) Date of publication:
**19.10.2016 Bulletin 2016/42**

(21) Application number: **14869695.8**

(22) Date of filing: **19.11.2014**

(51) Int Cl.:
*C04B 35/101* (2006.01)     *C04B 35/599* (2006.01)
*C21B 7/06* (2006.01)     *F27D 1/00* (2006.01)

(86) International application number:
**PCT/JP2014/080602**

(87) International publication number:
**WO 2015/087672 (18.06.2015 Gazette 2015/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.12.2013 JP 2013256189**

(71) Applicant: **Krosakiharima Corporation
Kitakyushu-shi
Fukuoka 806-8586 (JP)**

(72) Inventor: **MISHIMA, Masaaki
Kitakyushu-shi
Fukuoka 806-8586 (JP)**

(74) Representative: **Vossius & Partner
Patentanwälte Rechtsanwälte mbB
Siebertstrasse 3
81675 München (DE)**

(54) **BLAST FURNACE HEARTH LINING STRUCTURE**

(57)     Provided is a blast furnace hearth lining structure having excellent molten iron and slag resistances and high structural spalling resistance. The lining structure of the present invention is based on employing a sialon-bound alumina brick having a β'-sialon-bound microstructure exhibiting high structural spalling resistance as a lining brick, wherein a first sialon-bound alumina brick 8 prepared by setting an amount of β'-sialon-originating Si contained in the brick to fall within a specific range is installed in a portion of a blast furnace hearth requiring relatively high molten ion resistance, and a second sialon-bound alumina brick 7 prepared by setting an amount of β'-sialon-originating O (oxygen) contained in the brick to fall within a specific range is installed in a portion of the blast furnace hearth requiring relatively high slag resistance.

Fig. 1

EP 3 081 548 A1

**Description**

TECHNICAL FIELD

The present invention relates to a lining structure for a blast furnace hearth, i.e., a specific portion of a blast furnace which is located below a tuyere and in contact with molten pig iron or molten slag. As used in this specification, the term "molten pig iron" will be abbreviated as "molten iron", and the term "molten slag" will be abbreviated as "slag".

BACKGROUND ART

Recent years, in the field of blast furnaces, furnace size has become larger and larger, and operational conditions have become harsher and harsher due to operation under high top-pressure, operation under pulverized coal injection and others, thereby leading to an increase in risk factors causing damage to a refractory lining, and, on the other hand, it is desired to achieve longer lifetime of a blast furnace, with a view to suppressing a high initial investment cost therefor. A limiting factor for lifetime of a blast furnace is durability of a lining material for a sidewall and a hearth bottom of a specific portion (i.e., hearth) of a blast furnace located below a taphole. A reduction in wear of this portion leads to extension of blast furnace lifetime. Conceivable wear mechanisms include static corrosive wear caused by molten iron, abrasive (erosive) wear of a weakened brick microstructure, caused by a molten iron flow.

Generally, a carbonaceous refractory material is used as the lining material for the sidewall and the hearth bottom of the blast furnace hearth, wherein the mainstream material is a carbonaceous brick (block).

However, the carbonaceous brick containing a large amount of carbon component is poor in durability, because carbon is liable to dissolve into molten iron during use in the blast furnace hearth. For this reason, durability of the carbonaceous brick is ensured by intensifying cooling from outside the furnace to form a viscous molten iron layer on a working surface of the carbonaceous brick to thereby prevent dissolution of the carbonaceous brick into molten iron. However, such cooling from outside the furnace causes large energy loss.

Therefore, in recent years, a brick prepared by primarily using alumina which is less likely to dissolve into molten iron, while reducing the carbon content, has also been increasingly used. In particular, a sialon-bound alumina brick containing β'-sialon represented by the following chemical formula: $Si_{6-Z}Al_ZO_ZN_{8-Z}$, in a matrix area thereof, contains almost no carbon, so that it is excellent in molten iron resistance, and excellent in corrosion resistance against slag produced in the blast furnace. In addition, from a viewpoint of exhibiting: higher high-temperature strength and higher resistance to alkali corrosion, as compared to conventional oxide-based bricks; lower thermal conductivity as compared to silicon carbide-bound brick and silicon nitride-bound brick as a representative example of bricks having a non-oxide based binding microstructure; and high structural spalling resistance, the sialon-bound alumina brick is suitable as a lining brick for a blast furnace hearth.

One example of the sialon-bound alumina brick is disclosed in the following Patent Document 1. As to β'-sialon contained in a matrix area (binding matrix) of a sialon-bound alumina brick disclosed in the Patent Document 1, a Z value of the β'-salon (as used in this specification, the term "Z value" means a value of Z in the chemical formula of β'-salon: $Si_{6-Z}Al_ZO_ZN_{8-Z}$) is 0.5 to 4, preferably, 2.5 to 3.5, and an amount of the β'-salon contained in the brick is 12 to 45 mass%, preferably, 25 to 42 mass%. The sialon-bound alumina brick disclosed in the Patent Document 1 contains hexagonal boron nitride and/or crystalline flaky graphite particles, in order to maintain resistance to thermal shock.

The following Patent Document 2 discloses a blast furnace hearth brick having a composition comprising 97 mass% or more of $Al_2O_3$, 3 mass% or less of $SiO_2$ and 0.1 mass% or less of C, wherein a particle size distribution of an alumina-based raw material is specifically defined. Allegedly, a Si-containing component, such as $SiO_2$ SiC or $Si_3N_4$, is almost not contained, and thereby dissolution of Si into molten iron is reduced, resulting in excellent corrosion resistance.

CITATION LIST

[Parent Document]

Patent Document 1: JP 06-502140A (JP 3212600B)
Patent Document 2: JP 2009-242122A

SUMMARY OF INVENTION

[Technical Problem]

The brick disclosed in the Patent Document 1 contains hexagonal boron nitride and/or crystalline flaky graphite particles, so that there is a problem that deterioration in mechanical strength of an obtainable brick and dissolution of the flaky graphite particles into molten iron are unavoidable, thereby leading to damage of the brick. Moreover, the composition and content of β'-sialon disclosed in the Patent Document 1 include a range causing non-negligible erosion due to molten iron, thereby leading to damage of the brick. Thus, even now, damage of a blast furnace hearth is a limiting factor for lifetime of a blast furnace.

The brick disclosed in the Patent Document 2 consists approximately only of alumina. Alumina is easily wettable with molten iron and hardly dissolvable in molten iron, so that molten iron can more deeply infiltrate into pores of a brick. Thus, there is a problem that a molten iron infiltration phenomenon is gradually progressed along with operation for a long period of time, thereby causing damage due to so-called "structural spalling". This becomes a factor for making it hard to extend lifetime of a blast furnace hearth.

Therefore, the present invention addresses a technical problem of providing a blast furnace hearth lining structure having excellent molten iron resistance and high structural spalling resistance.

[Solution to Technical Problem]

The present invention provides a lining structure for a blast furnace hearth, which comprises a sialon-bound alumina brick containing β'-sialon in a matrix area thereof and containing corundum and β'-salon in a total amount of 95 mass% or more, wherein a value of Z in the following chemical formula of β'-salon: $Si_{6-Z}Al_ZO_ZN_{8-Z}$ (hereinafter referred to as "Z value of β'-salon") is in the range of 2.7 to 4.2, and an amount X (mass%) of 0'-salon contained in the brick satisfies the following formula (1): $5 \leq X \leq (280 + Z) / (168 - 28Z) \times 15$ --- (1), and wherein the sialon-bound alumina brick is installed in a portion of the blast furnace hearth which is free from contact with slag.

The present invention also provides a lining structure for a blast furnace hearth, which comprises a sialon-bound alumina brick containing β'-sialon in a matrix area thereof and containing corundum and β'-salon in a total amount of 95 mass% or more, wherein a Z value of β'-salon is in the range of 2.5 or less (except for 0), and an amount Y (mass%) of β'-sialon contained in the brick satisfies the following formula (2): $10 \leq Y \leq [(280 + Z) / 16Z] \times 6$ --- (2), and wherein the sialon-bound alumina brick is installed in a portion of the blast furnace hearth which is to be subjected to contact with slag.

In the lining structure of the present invention, the portion free from contact with slag may be located below a taphole, and the portion to be subjected to contact with slag may be located at and above the taphole.

[Effect of Invention]

In the blast furnace hearth lining structure of the present invention, a sialon-bound alumina brick prepared by setting an amount of Si originating from β'-sialon (amount of β'-sialon-originating Si) contained in the brick to fall within a specific range is installed in a portion of the blast furnace hearth requiring relatively high molten iron resistance (portion free from contact with slag), so that it becomes possible to suppress molten iron-induced wear of the blast furnace hearth. That is, the present invention can provide a blast furnace hearth lining structure having excellent molten iron resistance and high structural spalling resistance, thereby achieving longer lifetime of the blast furnace hearth.

In the blast furnace hearth lining structure of the present invention, a sialon-bound alumina brick prepared by setting an amount of O (oxygen) originating from β'-sialon (β'-sialon-originating O) contained in the brick to fall within a specific range is installed in a portion of the blast furnace hearth requiring relatively high slag resistance (portion to be subjected to contact with slag), so that it becomes possible to suppress slag-induced wear of the blast furnace hearth.

In addition, the sialon-bound alumina brick used in the present invention has a relatively small thermal conductivity, so that energy loss in blast furnace operation is reduced. This also contributes to a reduction in global environmental load.

BRIEF DESCRIPTION OF DRAWINGS

FIG. 1 is a graph obtained by plotting Z values and contents of β'-sialon in test samples in Table 1.
FIG. 2 is a graph obtained by plotting Z values and contents of β'-sialon in test samples in Table 2.
FIG. 3A is a sectional view of a miniature blast furnace (corrosion tester) prepared by simulating a blast furnace hearth.

FIG. 3B is a sectional view of the miniature blast furnace (corrosion tester) prepared by simulating a blast furnace hearth.
FIG. 3C is a top plan view of the corrosion tester prepared by simulating a blast furnace hearth.
FIG. 4 is a sectional view depicting a structure of a blast furnace hearth using the present invention.
FIG. 5 is a sectional view depicting a substantial part of the blast furnace hearth in FIG. 4.

DESCRIPTION OF EMBODIMENTS

The inventors of this application conducted various experiments on a sialon-bound alumina brick containing β'-sialon in a matrix area thereof, with a focus on relationships between respective ones of resistances to molten iron and slag and amounts of β'-sialon-originating Si and O contained in the brick. As a result, the inventors found that there are optimal ranges of the Si amount and the O amount for each of the molten iron resistance and the slag resistance. Then, the inventors assumed that the molten iron resistance should be considered to be important for a sialon-bound alumina brick to be installed in a portion of a blast furnace hearth located below a taphole (iron notch), because an amount of slag is very small in such a location, whereas the slag resistance should be considered to be important for a sialon-bound alumina brick to be installed in a portion of the blast furnace hearth located at and above the taphole, because the amount of slag is large in such a location. Then, the inventors found that, when a brick prepared by setting an amount of β'-sialon-originating Si contained in the brick to fall within a specific range is installed in the portion requiring relatively high molten iron resistance (portion free from contact with slag), and a brick prepared by setting an amount of β'-sialon-originating O contained in the brick to fall within a specific range is installed in the portion requiring relatively high slag resistance (portion to be subjected to contact with slag), it becomes possible to significantly improve lifetime of the blast furnace hearth.

The present invention will now be specifically described.

As a premise for the present invention, a sialon-bound alumina brick to be used in the present invention has a mineralogical composition consisting substantially of β'-sialon and corundum. β'-sialon has an advantageous effect of being excellent in molten iron resistance, slag resistance and alkali resistance. In addition, as compared to alumina, β'-sialon is hardly wettable with molten iron and can form a dense brick microstructure, so that the molten iron infiltration phenomenon is less likely to occur, and thus a structural spalling-induced problem is less likely to occur. Corundum (alumina) does not contain Si, so that it has an advantageous effect of being excellent in molten iron resistance. In addition, both of β'-sialon and corundum have lower thermal conductivity than carbon, so that energy loss to be caused by heat dissipation is reduced.

Although the sialon-bound alumina brick used in the present invention consists substantially of β'-sialon and corundum, as mentioned above, it may include an unavoidable component to an extent that there is no influence on durability. For example, an amorphous phase, impurities in raw materials used, carbon in a binder used, and a small amount of nitride and carbide produced during burning may be contained. In this case, it is permissible to contain one or more of them in a total amount of less than 5 mass%. That is, as long as a total amount of β'-sialon and corundum in the brick is 95 mass% or more, it is possible to sufficiently bring out the effects of the present invention.

In a brick microstructure, a matrix area is more likely to undergo infiltration of molten iron or slag, as compared to an aggregate area. Thus, in the present invention, β'-sialon serving as a sialon binder is contained, particularly, to obtain an effect of preventing infiltration of molten iron or slag (anti-molten iron/slag infiltration effect). The matrix area may be composed of a mixture of corundum and β'-sialon or may be composed only of β'-sialon. In either case, the anti-molten iron/slag infiltration effect can be obtained. Preferably, the matrix area contains β'-sialon in an amount of 5 mass% or more. On the other hand, the aggregate area may be composed only of one of corundum and β'-sialon, or may be composed of both of corundum and β'-sialon.

As used in this specification, the term "matrix area" means a matrix of a refractory microstructure formed by burning finer particles (particle size of less than 1 mm) than aggregate particles, wherein the aggregate particles are bound by the matrix. The term "sialon-bound" means a state of a refractory microstructure in which the aggregate particles are bound by β'-sialon crystals which have been created and developed in the matrix area during burning.

An amount of Si contained in β'-sialon varies according to the Z value of the chemical formula of β'-sialon. Thus, based on the chemical formula of β'-sialon: $Si_{6-Z}Al_ZO_ZN_{8-Z}$ an amount S (mass%) of Si in the chemical formula of β'-sialon is expressed as the following formula (3), wherein atomic weights of Si, Al, O and N are assumed to be, respectively, 28, 27, 16 and 14.

$$S = [28 (6 - Z) / (28 (6 - Z) + 27Z + 16Z + 14 (8 - Z))] \times 100$$

$$= [(168 - 28Z) / (280 + Z)] \times 100 \qquad \text{--- (3)}$$

Then, an amount of β'-sialon-originating Si contained in the sialon-bound alumina brick used in the present invention can be expressed as the following formula (4), where A denotes an amount (mass%) of β'-sialon contained in the brick.

$$A \, / \, 100 \times S = A \, / \, 100 \times [(168 - 28Z) \, / \, (280 + Z)] \times 100 \qquad \text{--- (4)}$$

According to experiments conducted by the inventors, it was found that the sialon-bound alumina brick in the present invention exhibits good molten iron resistance when the amount of β'-sialon-originating Si contained in the brick is 15 mass% or less. Based on this experimental result, the following formula (5) is obtained.

$$A \, / \, 100 \times [(168 - 28Z) \, / \, (280 + Z)] \times 100 \leq 15 \qquad \text{--- (5)}$$

Then, in order to allow the Si amount to be 15 mass% or less, the amount A (mass%) of β'-sialon contained in the sialon-bound alumina brick may be set to satisfy the following formula (6).

$$A \leq (280 + Z) \, / \, (168 - 28Z) \times 15 \qquad \text{--- (6)}$$

Further, it is necessary that the amount of β'-sialon contained in the brick is 5 mass% or more, because, according to the experiments, if the amount of β'-sialon contained in the brick is less than 5 mass%, molten iron infiltration resistance (resistance to infiltration of molten iron) of the brick is lowered to cause deterioration in molten iron resistance, thereby leading to a problem in actual use as a blast furnace hearth lining structure. Thus, when the amount of β'-sialon contained in the brick is denoted by X (mass%), the aforementioned formula (1) is derived.

$$5 \leq X \leq (280 + Z) \, / \, (168 - 28Z) \times 15 \qquad \text{--- (1)}$$

The Z value of β'-salon also exerts an influence on molten iron resistance. Thus, in the formula (1), the Z value is preferably in the range of 2.7 to 4.2. If the Z value is less than 2.7, a Si / Al ratio in β'-sialon becomes excessively large to cause deterioration in molten iron resistance of β'-sialon, thereby leading to a problem in actual use. Further, it is widely known that β'-salon having a Z value of greater than 4.2 does not actually exist.

As above, the sialon-bound alumina brick satisfying the formula (1) has excellent molten iron resistance. Thus, when the sialon-bound alumina brick satisfying the formula (1) is installed in a portion of a blast furnace hearth which is free from contact with slag, the blast furnace hearth is significantly improved in molten iron resistance so as to achieve longer lifetime thereof.

Next, an amount O (mass%) of O (oxygen) contained in β'-sialon can be expressed as the following formula (7), in the same manner as that for the aforementioned formula (3).

$$O = [16Z \, / \, (28 \, (6 - Z) + 27Z + 16Z + 14 \, (8 - Z))] \times 100$$

$$= [16Z \, / \, (280 + Z)] \times 100 \qquad \text{--- (7)}$$

Then, an amount of β'-sialon-originating O contained in the sialon-bound alumina brick used in the present invention can be expressed as the following formula (8), where A denotes an amount (mass%) of β'-sialon contained in the brick.

$$A \, / \, 100 \times O = A \, / \, 100 \times [16Z \, / \, (280 + Z)] \times 100 \qquad \text{--- (8)}$$

According to experiments conducted by the inventors, it was found that the sialon-bound alumina brick in the present invention exhibits good slag resistance when the amount of β'-sialon-originating O contained in the brick is 6 mass% or less. Based on this experimental result, the following formula (9) is obtained.

$$A / 100 \times [16Z / (280 + Z)] \times 100 \leq 6 \qquad \text{--- (9)}$$

Then, in order to allow the O amount to be 6 mass% or less, the amount A (mass%) of β'-sialon contained in the sialon-bound alumina brick may be set to satisfy the following formula (10).

$$A \leq [(280 + Z) / 16Z] \times 6 \qquad \text{--- (10)}$$

Further, it is necessary that the amount of 0'-salon contained in the brick is 10 mass% or more, because, according to the experiments, if the amount of β'-salon contained in the brick is less than 10 mass%, the slag resistance of the brick deteriorates, thereby leading to a problem in actual use as a blast furnace hearth lining structure. Thus, when the amount of β'-sialon contained in the brick is denoted by Y (mass%), the aforementioned formula (2) is derived,.

$$10 \leq Y \leq [(280 + Z) / 16Z] \times 6 \qquad \text{--- (2)}$$

The Z value of β'-sialon also exerts an influence on slag resistance. Thus, in the formula (2), the Z value is preferably in the range of greater than 0 to 2.5 ($0 < Z \leq 2.5$). If the Z value is greater than 2.5, an O / N ratio in β'-sialon becomes excessively large to cause deterioration in slag resistance of β'-sialon, thereby leading to a problem in actual use.
As above, the sialon-bound alumina brick satisfying the formula (2) has excellent slag resistance. Thus, when the sialon-bound alumina brick satisfying the formula (2) is installed in a portion of a blast furnace hearth which is to be subjected to contact with slag, the blast furnace hearth is significantly improved in slag resistance so as to achieve longer lifetime thereof.
Therefore, when the sialon-bound alumina brick satisfying the formula (1) is installed in a portion of a blast furnace hearth which is free from contact with slag, and the sialon-bound alumina brick satisfying the formula (2) is installed in a portion of the blast furnace hearth which is to be subjected to contact with slag, the blast furnace hearth can satisfy both of the molten iron resistance and the slag resistance so as to achieve further extended lifetime thereof.
More specifically, the portion free from contact with slag may be defined as a portion located below a taphole, and the portion to be subjected to contact with slag may be defined as a portion located at and above the taphole. This makes it possible to improve the lifetime of the blast furnace hearth. The portion located at the taphole temporarily comes into contact with slag only during tapping of molten iron. Thus, one or both of the brick satisfying the formula (1) and the brick satisfying the formula (2) may be installed therein. However, the lifetime of the blast furnace hearth can be further extended when a boundary between the two portions is set along a lower edge of the taphole.
A sialon-bound alumina brick to be used in the present invention can be obtained in a usual way, e.g., by: preparing a mixture of a 0'-salon component raw material or a β'-salon raw material with an alumina raw material; kneading the mixture together with a binder added thereto; and subjecting the resulting kneaded product to shaping and then burning.
As the alumina raw material, it is possible to employ a commonly-used raw material for a refractory material. For example, it may be one or more of fused alumina, sintered alumina and calcined alumina. Preferably, the alumina raw material contains $Al_2O_3$ in an amount of 95 mass% or more.
As the β'-salon component raw material, it is possible to employ silicon, silica, silicone nitride, silicon oxynitride, aluminum, alumina, aluminum nitride, aluminum oxynitride, or mullite. For example, it may be a mixture obtained by mixing silicone nitride, alumina and aluminum nitride at a given ratio.
As the β'-salon raw material, it is possible to employ a single-or poly-crystalline body of β'-sialon, or a pulverized/granulated product thereof. For example, it may be obtained by pulverizing or granulating a sintered β'-sialon material.
The Z value of β'-sialon is determined by respective ratios of Si : Al and O : N each constituting β'-salon, e.g., by a ratio of $Si_3N_4$ : AlN : $Al_2O_3$.

[Examples]

The following Tables 1 and 2 present test results of various sialon-bound alumina bricks for use in a blast furnace hearth in the present invention. More specifically, Table 1 represents various samples of sialon-bound alumina bricks to be installed in a portion of the blast furnace hearth which is free from contact with slag, and Table 2 presents various samples of sialon-bound alumina bricks to be installed in a portion of the blast furnace hearth which is to be subjected to contact with slag.

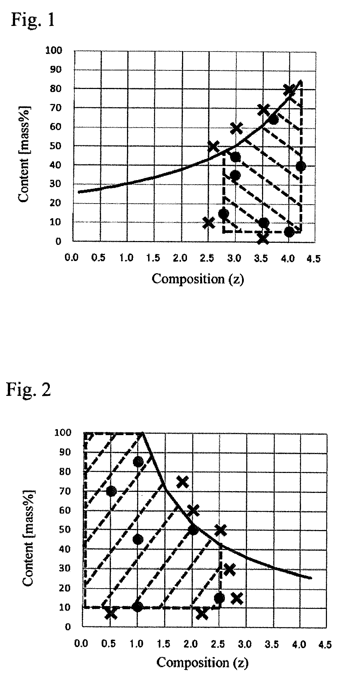

FIG. 1 and FIG. 2 are, respectively, a graph obtained by plotting Z values and contents of β'-sialon in the test samples in Table 1, and a graph obtained by plotting Z values and contents of β'-salon in the test samples in Table 2. In FIGS. 1 and 2, a sample could obtain an excellent effect is denoted by ●, and a sample exhibited insufficient effect is denoted by ×. Lines indicative of respective upper and lower limits of the content and the Z value of β'-salon defined by the formula (1) and lines indicative of respective upper and lower limits of the content and the Z value of β'-salon defined by the formula (2) are added, respectively, to FIG. 1 and FIG. 2.

TABLE 1

| | | Particle Size | 1-1 | 1-2 | 1-3 | 1-4 | 1-5 | 1-2 | 1-7 | 1-8 | 1-9 | 1-10 | 1-11 | 1-12 | 1-13 | 1-14 |
|---|---|---|---|---|---|---|---|---|---|---|---|---|---|---|---|---|
| Ratio of refractory raw material to mixture (mass%) | Fused alumina | 3mm or less | 80 | 70 | 0 | 70 | 65 | 55 | 35 | 70 | 0 | 50 | 30 | 0 | 20 | 70 |
| | Sintered alumina | 3mm or less | 0 | 0 | 60 | 0 | 0 | 0 | 0 | 0 | 70 | 0 | 10 | 30 | 0 | 0 |
| | Fused alumina | less than 74μm | 10 | 15 | 0 | 25 | | | | 26 | 20 | | | 30 | | 30 |
| | (Total of alumina) | | 90 | 85 | 60 | 95 | 65 | 55 | 35 | 96 | 90 | 50 | 40 | 30 | 20 | 100 |
| | β'-sialon particles | 3mm or less | 0 | 0 | 10 | 0 | 5 | 15 | 35 | 0 | 0 | 0 | 20 | 35 | 50 | |
| | β'-sialon particles | less than 74μm | 10 | 15 | 20 | 0 | 20 | 30 | 10 | 3 | 10 | 30 | 40 | 35 | 30 | |
| | β'-sialon component particles | less than 74μm | 0 | 0 | 10 | 5 | 10 | 0 | 20 | 0 | 0 | 20 | 0 | 0 | 0 | |
| | (Total of β'-sialon) | | 10 | 15 | 40 | 5 | 35 | 45 | 65 | 3 | 10 | 50 | 60 | 70 | 80 | |

| | | Particle Size | 1-1 | 1-2 | 1-3 | 1-4 | 1-5 | 1-2 | 1-7 | 1-8 | 1-9 | 1-10 | 1-11 | 1-12 | 1-13 | 1-14 |
|---|---|---|---|---|---|---|---|---|---|---|---|---|---|---|---|---|
| Composition of burned brick | Corundum (mass%) | | 89 | 84 | 59 | 94 | 64 | 54 | 35 | 95 | 89 | 50 | 40 | 30 | 20 | 99 |
| | β'-sialon (mass%) | | 10 | 15 | 40 | 5 | 35 | 45 | 65 | 3 | 10 | 50 | 60 | 70 | 80 | |
| | Composition of β'-sialon (Z value) | | 3,5 | 2,7 | 4,2 | 4,0 | 3,0 | 3,0 | 3,7 | 3,5 | 2,5 | 2,6 | 3,0 | 3,5 | 4,0 | |
| | Upper limit (mass%) of β'-sialon in Formula (1) | | 61 | 46 | 85 | 76 | 51 | 51 | 66 | 61 | 43 | 45 | 51 | 61 | 76 | |
| | Content (mass%) of β'-sialon-originating Si | | 2 | 5 | 7 | 1 | 10 | 13 | 15 | 1 | 3 | 17 | 18 | 17 | 16 | 0 |
| | Content (mass%) of β'-sialon-originating O | | 2 | 2 | 9 | 1 | 6 | 8 | 14 | 1 | 1 | 7 | 10 | 14 | 18 | 0 |
| Evaluation result of burned brick | Bulk specific gravity | | 3,34 | 3,33 | 3,32 | 3,35 | 3,32 | 3,31 | 3,30 | 3,37 | 3,37 | 3,33 | 3,32 | 3,31 | 3,27 | 3,40 |
| | Apparent porosity (%) | | 16 | 15 | 16 | 15 | 16 | 16 | 15 | 17 | 16 | 16 | 16 | 17 | 16 | 14 |
| | Compressive strength (Mpa) | | 170 | 190 | 190 | 180 | 180 | 200 | 220 | 160 | 150 | 175 | 190 | 180 | 200 | 150 |
| | Molten iron resistance (Wear index) | | 50 | 35 | 45 | 35 | 60 | 70 | 70 | 110 | 120 | 110 | 105 | 110 | 130 | 100 |
| | Slag resistance (Wear index) | | 80 | 90 | 85 | 90 | 95 | 95 | 105 | 105 | 100 | 90 | 80 | 90 | 120 | 100 |

TABLE 2

| | | Particle Size | 2-1 | 2-2 | 2-3 | 2-4 | 2-5 | 2-6 | 2-7 | 2-8 | 2-9 | 2-10 | 2-11 | 2-12 | 2-13 |
|---|---|---|---|---|---|---|---|---|---|---|---|---|---|---|---|
| Ratio of refractory raw material to mixture (mass%) | Fused alumina | 3mm or less | 60 | 70 | 30 | 0 | 55 | 30 | 70 | 70 | 70 | 70 | 20 | 40 | 25 |
| | Sintered alumina | 3mm or less | 10 | 0 | 0 | 0 | 0 | 20 | 0 | 0 | 0 | 0 | 30 | 0 | 0 |
| | Fused alumina | less than 74$\mu$m | 20 | 15 | 0 | 15 | | | 22 | 22 | 15 | | | | |
| | (Total of alumina) | | 90 | 85 | 30 | 15 | 55 | 50 | 92 | 92 | 85 | 70 | 50 | 40 | 25 |
| | $\beta$'-sialon particles | 3mm or less | 0 | 0 | 30 | 40 | 15 | 20 | 0 | 0 | 0 | 0 | 20 | 30 | 45 |
| | $\beta$'-sialon particles | less than 74$\mu$m | 0 | 15 | 40 | 30 | 10 | 20 | 0 | 0 | 7 | 30 | 30 | 15 | 15 |
| | $\beta$'-sialon component particles (Total of $\beta$'-sialon) | less than 74$\mu$m | 10 | 0 | 0 | 15 | 20 | 10 | 8 | 8 | 8 | 0 | 0 | 15 | 15 |
| | | | 10 | 15 | 70 | 85 | 45 | 50 | 8 | 8 | 15 | 30 | 50 | 60 | 75 |
| Composition of burned brick | Corundum (mass%) | | 89 | 84 | 30 | 15 | 54 | 50 | 91 | 91 | 84 | 69 | 50 | 40 | 25 |
| | $\beta$'-sialon (mass%) | | 10 | 15 | 70 | 85 | 45 | 50 | 8 | 8 | 15 | 30 | 50 | 60 | 75 |
| | Composition of $\beta$'-sialon (Z value) | | 1,0 | 2,5 | 0,5 | 1,0 | 1,0 | 2,0 | 0,5 | 2,2 | 2,8 | 2,7 | 2,5 | 2,0 | 1,8 |
| | Upper limit (mass%) of $\beta$'-sialon in Formula (2) | | 105 | 42 | 210 | 105 | 105 | 53 | 210 | 48 | 38 | 39 | 42 | 53 | 59 |
| | Content (mass%) of $\beta$'-sialon-originating Si | | 5 | 5 | 38 | 42 | 22 | 20 | 4 | 3 | 5 | 10 | 17 | 24 | 31 |
| | Content (mass%) of $\beta$'-sialon-originating O | | 1 | 2 | 2 | 5 | 3 | 6 | 0 | 1 | 2 | 5 | 7 | 7 | 8 |

(continued)

| | Particle Size | 2-1 | 2-2 | 2-3 | 2-4 | 2-5 | 2-6 | 2-7 | 2-8 | 2-9 | 2-10 | 2-11 | 2-12 | 2-13 |
|---|---|---|---|---|---|---|---|---|---|---|---|---|---|---|
| Evaluation result of burned brick | Bulk specific gravity | 3,34 | 3,34 | 3,28 | 3,25 | 3,31 | 3,31 | 3,35 | 3,35 | 3,33 | 3,33 | 3,32 | 3,31 | 3,27 |
| | Apparent porosity (%) | 16 | 16 | 17 | 16 | 15 | 16 | 17 | 16 | 16 | 16 | 17 | 16 | 17 |
| | Compressive strength (Mpa) | 150 | 160 | 160 | 190 | 220 | 210 | 160 | 160 | 170 | 180 | 170 | 180 | 170 |
| | Molten iron resistance (Wear index) | 95 | 95 | 140 | 150 | 130 | 120 | 50 | 65 | 70 | 105 | 110 | 130 | 135 |
| | Slag resistance (Wear index) | 60 | 70 | 80 | 65 | 55 | 70 | 110 | 120 | 120 | 120 | 130 | 130 | 120 |

In Tables 1 and 2, the "β'-sialon particles" mean a granular material prepared through a sintering process in such a manner as to allow the Z value to become a given value. The "β'-sialon component particles" means a mixture obtained by mixing $Si_3N_4$, $Al_2O_3$ and AlN at a mixing ratio allowing the Z value to stand at a given value. Each of the β'-salon particles and the β'-sialon component particles had a purity of 99.5 mass%. Fused alumina and sintered alumina each containing $Al_2O_3$ in an amount of 99.0 mass% were used for the samples. In the test samples presented in Tables 1 and 2, the Z value of β'-sialon in the raw materials used was identical to the Z value measured in the burned brick.

Each of the mixtures represented in Tables 1 and 2 was kneaded together with a phenolic resin added thereto as a binder, and the kneaded product was shaped into a brick having a size of 230 mm × 100 mm × 75 mm, by using a hydraulic press machine. Then, the brick was dried and then burned in a nitrogen atmosphere at 1400°C. As one exception, however, only the sample 1-14 was burned in an oxidation atmosphere.

Each of the burned bricks in the samples was evaluated in terms of composition, bulk specific gravity, apparent porosity, compressive strength, molten iron resistance and slag resistance.

As to the composition of the burned brick, through microscopic microstructural observation and powder X-ray diffractometry, it was ascertained that each of the burned bricks, except for that in the sample 1-14, consists substantially of 0'-salon and corundum, and β'-sialon is contained in an matrix area thereof. The content and the Z value of β'-sialon in the burned brick were determined based on a diffraction peak position of β'-sialon obtained by powder X-ray diffractometry, and a measured content of nitrogen in the burned brick. Then, respective contents of β'-sialon-originating Si and O were calculated based on the determined content and Z value of β'-sialon, and expressed in units of mass% with respect to the entire brick. Further, an upper limit of the content of β'-sialon calculated by the formula (1): $5 \leq X \leq (280 + Z) / (168 - 28Z) \times 15$, using the determined Z value of β'-sialon, and an upper limit of the content of β'-sialon calculated by the formula (2): $10 \leq Y \leq [(280 + Z) / 16Z] \times 6$, using the determined Z value of β'-sialon, are presented, respectively, in Table 1 and Table 2.

Each of the bulk specific gravity and the apparent porosity was measured according to JIS-R2205, and the compressive strength was measured according to JIS-R2206. Each of the molten iron resistance and the slag resistance was evaluated from a worn volume after completion of a test in which the burned brick was immersed in and corroded by blast furnace slag and molten iron melted by an induction heating-type melting furnace and maintained at 1550°C, for 3 hours. Each of the molten iron resistance and the slag resistance is expressed by an index calculated on an assumption that a wear amount in the burned brick in the sample 1-14 is 100. The smaller the index, the better the resistance.

Table 1 shows that the samples 1-1 to 1-7 each prepared such that the content of β'-sialon falls within the range defined by the formula (1), and the Z value falls within the range of 2.7 to 4.2 as defined in the appended claim 1 are excellent in molten iron resistance, and thereby excellently suitable as a brick to be installed in a portion of a blast furnace hearth which is free from contact with slag.

The sample 1-8 in which the content of β'-sialon is 3 mass%, i.e., less than the lower limit of 5 mass% in the formula (1), is inferior in terms of the molten iron resistance and the slag resistance, as compared to the sample 1-4 in which the content of β'-sialon is 5 mass%.

The sample 1-9 in which the Z value of β'-sialon is 2.5, i.e., less than the lower limit of 2.5 as defined in the appended claim 1, is inferior in terms of the molten iron resistance and the slag resistance, as compared to the sample 1-2 in which the Z value of β'-sialon is 2.7.

The samples 1-10 to 1-13 in which the content of β'-sialon is greater than the upper limit calculated in the formula (1) and the content of Si is greater than the aforementioned upper limit of 15 mass% is inferior in terms of the molten iron resistance, as compared to the sample 1-7 in which the content of β'-sialon is 65 mass%, i.e., less than the upper limit calculated in the formula (1) and the content of Si is equal to the upper limit of 15 mass%.

The sample 1-14 consisting substantially of corundum without containing any sialon was evaluated as being inferior in terms of both of the molten iron resistance and the slag resistance.

Further, FIG. 1 shows that the samples prepared such that the content and the Z-value of β'-sialon falls within the range as defined in the appended claim 1 can obtain sufficient molten iron resistance.

Next, the test samples in Table 2 will be described.

Table 2 shows that the samples 2-1 to 2-6 each prepared such that the content of β'-sialon falls within the range defined by the formula (2), and the Z value is 2.5 or less (i.e., the content of β'-sialon-originating O is 6 mass% or less) are excellent in slag resistance, and thereby excellently suitable as a brick to be installed in a portion of a blast furnace hearth which is to be subjected to contact with slag.

The samples 2-7 and 2-8 in which the content of β'-salon is less than the lower limit of 10 mass% in the formula (2) is inferior in terms of the slag resistance, as compared to the sample 2-1 in which the content of β'-salon is 10 mass%.

The samples 2-9 and 2-10 in which the Z value of β'-sialon is greater than 2.5 is inferior in terms of the slag resistance, as compared to the sample 2-2 in which the Z value of β'-sialon is 2.5.

The samples 2-11 to 2-13 in which the content of β'-sialon is greater than the upper limit calculated in the formula (2) and the content of O in β'-sialon is greater than 6 mass% is inferior in terms of the slag resistance, as compared to the sample 2-6 in which the content of O in β'-sialon is 6 mass%.

Further, FIG. 2 shows that the samples prepared such that the content and the Z-value of β'-salon falls within the above desired range can obtain sufficient slag resistance.

The above results strongly suggest that a lining structure for a blast furnace hearth, comprising: a first sialon-bound alumina brick containing β'-sialon in a matrix area thereof and containing corundum and β'-sialon in a total amount of 95 mass% or more, wherein a Z value of β'-sialon is in the range of 2.7 to 4.2, and a content X (mass%) of β'-sialon in the brick satisfies the formula (1), and wherein the first sialon-bound alumina brick is installed as a portion of the blast furnace hearth which is free from contact with slag; and a second sialon-bound alumina brick containing β'-sialon in a matrix area thereof and containing corundum and β'-sialon in a total amount of 95 mass% or more, wherein a Z value of β'-sialon is in the range of 2.5 or less (except for 0), and a content Y (mass%) of 0'-salon in the brick satisfies the formula (2), and wherein the second sialon-bound alumina brick is installed as a portion of the blast furnace hearth which is to be subjected to contact with slag, can satisfy both of the molten iron resistance and the slag resistance, thereby achieving longer lifetime of a blast furnace.

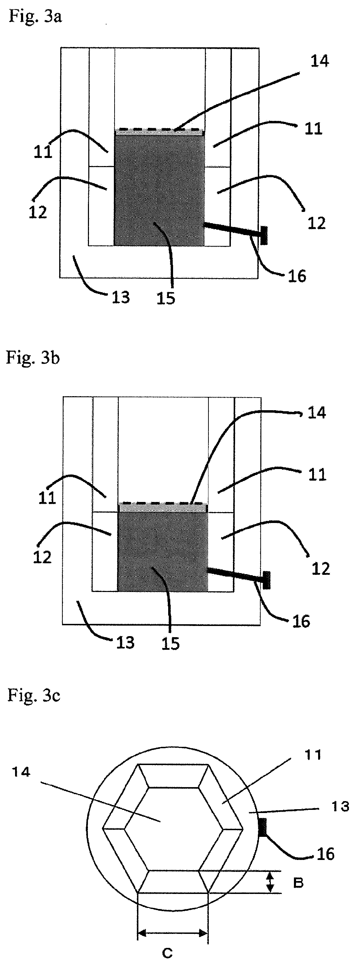

Next, a test method using a miniature blast furnace (corrosion tester) depicted in FIGS. 3A to 3C will be described, wherein the miniature blast furnace is prepared by simulating a blast furnace hearth lining structure,

This miniature blast furnace is constructed such that a protective material 13 is lined on an inner side of a shell (not depicted), and each of the burned bricks in Table 1 or 2 is installed on an inner side of the protective material 13. More specifically, six upper bricks 11 each having a width C of 200 mm, a thickness B of 50 mm and a height of 500 mm, and six lower bricks 12 each having a width C of 200 mm, a thickness B of 50 mm and a height of 300 mm, were prepared, and each of the group of upper bricks 11 and the group of lower bricks 12 are arranged to form a hexagonal tube. Pig iron and slag were melted to form two layers of a layer of slag 14 and a layer of molten iron 15 as depicted in FIG. 3A, and an input amount of the slag 14 and the molten iron 15 is adjusted such that a boundary between the two layers is located at a relatively upper side of the upper bricks 11 (about 130 mm in which a thickness of the slag layer is 30 mm). The molten iron was maintained at 1550°C for 20 hours. Then, the molten iron was discharged from a taphole 16 in such a manner that a boundary between the molten iron 15 and the slag 14 was coincident with a boundary between the upper bricks 11 and the lower bricks 12, as depicted in FIG. 3B. This state was maintained for 4 hours. Then, molten iron at 1550°C was input to return the liquid level to the state in FIG. 3A, and this state was maintained for 20 hours. The above operations were repeated until the state in FIG. 3A is maintained for 120 hours in total, and the state in FIG. 3B is maintained for 24 hours in total. Then, the lower bricks 12 were evaluated by an average (mm) of respective maximum wear amounts (length: mm) in cross-sections of the six lower bricks, and the upper bricks 11 were evaluated by an average of respective wear amounts of the six upper bricks at positions above a portion (lower edge) thereof in contact with the lower bricks 12, by 10 mm. In the above test, the temperature of molten iron was managed by means of induction heating. The slag used was blast furnace slag having a chemical composition comprising 35 mass% of $SiO_2$, 43 mass% of $CaO$, 14 mass% of $Al_2O_3$, and 5 mass% of $MgO$.

A result of the above test is summarized in the following Table 3. In Table 3, the number described in each field of the rows of "Lower Brick" and "Upper Brick" correspond to the number of each sample in Tables 1 and 2. The following evaluation is made on the basis of a wear amount in Comparative Example 2 in which each liming brick consists substantially of corundum. In each of Inventive Examples 1 to 4, the wear amount in the lower brick was reduced, i.e., the effect of the present invention was found. On the other hand, in Comparative Example 1, the lower brick had a similar wear amount to that in Comparative Example 2. The upper brick in each of Comparative Examples 1 and 2 had a wear amount greater than those of Inventive Examples. This is probably because wear of the lower bricks exerts an influence on wear of the upper bricks. That is, reducing wear of the lower bricks makes it possible to obtain an effect of reducing wear of the upper bricks.

TABLE 3

| | Inventive Example 1 | Inventive Example 2 | Inventive Example 3 | Inventive Example 4 | Comparative Example 1 | Comparative Example 2 |
|---|---|---|---|---|---|---|
| Lower Brick | 1-2 | 1-5 | 1-5 | 1-4 | 2-1 | 1-14 |
| Upper Brick | 2-6 | 2-1 | 1-5 | 1-14 | 2-1 | 1-14 |
| Wear Amount (mm) Lower Brick | 6 | 8 | 8 | 7 | 13 | 15 |
| Wear Amount (mm) in Upper Brick | 5 | 6 | 8 | 7 | 12 | 36 |

The result of the above simulation test shows that the blast furnace hearth lining structure of the present invention can significantly improve lifetime of a blast furnace, as compared to a conventional liming structure.

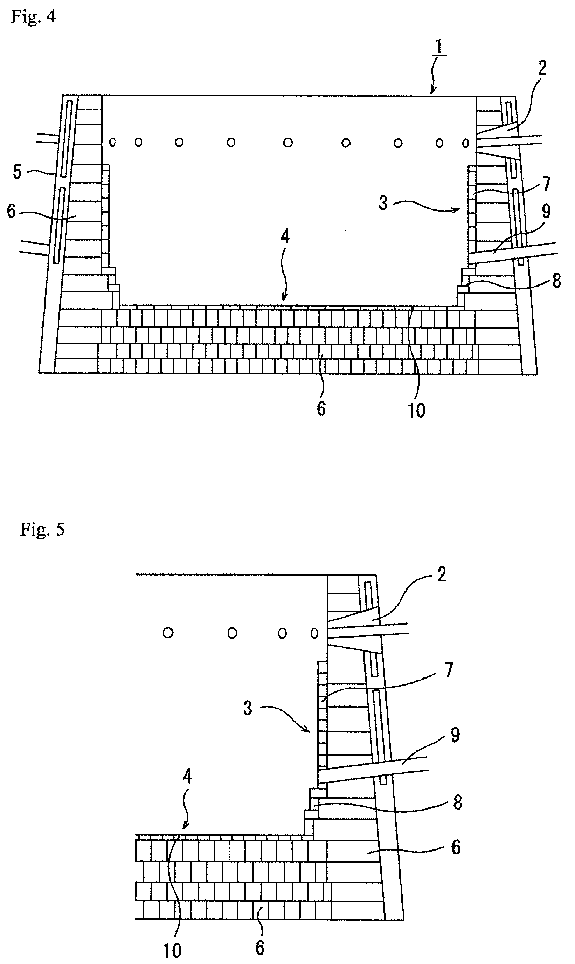

Next, with reference to FIGS. 4 and 5, a specific example of the blast furnace hearth lining structure of the present invention will be described.

FIG. 4 depicts a structure of a blast furnace hearth, and FIG. 5 depicts a substantial part thereof. The blast furnace hearth 1 comprises a sidewall 3 and a hearth bottom 4 which are located below a tuyere 2. The sidewall 3 comprises: a shell 5; a plurality of carbon bricks 6 lined on an inner side of the shell 5; and two types of sialon-bound alumina bricks 7, 8 lined on an inner side of the carbon bricks 6. Specifically, each of the bricks 7 lined on an upper region of the sidewall 3 located at and above a taphole 9 is composed of the brick in the test sample 2-5 in Table 2, and each of the bricks 8 lined on a lower region of the sidewall 3 located below the taphole 9 is composed of the brick in the test sample 1-3 in Table 1. The hearth bottom 4 comprises: a plurality of carbon bricks 6; and a plurality of high-alumina bricks 10 lined on the carbon bricks 6.

In the example depicted in FIG. 4, the two types of sialon-bound alumina bricks 7, 8 according to the present invention are lined only on the sidewall 3. Alternatively, the sialon-bound alumina bricks 8 according to the present invention may be used as lining bricks for the hearth bottom 4, in place of the high-alumina bricks 10. This makes it possible to extend lifetime of the hearth bottom 4. Further, the carbon bricks 6 may be substituted by the sialon-bound alumina bricks according to the present invention. This makes it possible to eliminate a need for water-cooling to thereby reduce energy loss due to heat dissipation and extend lifetime of a blast furnace.

LIST OF REFERENCE SIGNS

| | |
|---|---|
| 1: | blast furnace hearth |
| 2: | tuyere |
| 3: | sidewall |
| 4: | hearth bottom |
| 5: | shell |
| 6: | carbon brick |
| 7, 8: | sialon-bound alumina brick according to the present invention |
| 9: | taphole |
| 10: | high-alumina brick |
| 11: | upper brick |
| 12: | lower brick |
| 13: | heat insulation material |
| 14: | slag |
| 15: | molten iron |
| 16: | taphole |

**Claims**

1. A lining structure for a blast furnace hearth, comprising a sialon-bound alumina brick containing 0'-salon in a matrix area thereof and containing corundum and $\beta$'-sialon in a total amount of 95 mass% or more, wherein a value of Z in the following chemical formula of '$\beta$-sialon: $Si_{6-z}Al_zO_zN_{8-z}$ (hereinafter referred to as "Z value of $\beta$'-salon") is in the range of 2.7 to 4.2, and an amount X (mass%) of $\beta$'-sialon contained in the brick satisfies the following formula (1):

$$5 \le X \le (280 + Z) / (168 - 28Z) \times 15 \qquad \text{--- (1)}$$

, and wherein the sialon-bound alumina brick is installed in a portion of the blast furnace hearth which is free from contact with slag.

2. The lining structure as recited in claim 1, comprising a sialon-bound alumina brick containing $\beta$'-sialon in a matrix area thereof and containing corundum and $\beta$'-sialon in a total amount of 95 mass% or more, wherein a Z value of $\beta$'-sialon is in the range of 2.5 or less (except for 0), and an amount Y (mass%) of $\beta$'-sialon contained in the brick satisfies the following formula (2):

$$10 \leq Y \leq [(280 + Z) / 16Z] \times 6 \qquad --- (2)$$

, and wherein the sialon-bound alumina brick is installed in a portion of the blast furnace hearth which is to be subjected to contact with slag.

3. The lining structure as recited in claim 1 or 2, wherein the portion free from contact with slag is located below a taphole, and the portion to be subjected to contact with slag is located at and above the taphole.

## Fig. 1

## Fig. 2

Fig. 3a

Fig. 3b

Fig. 3c

Fig. 4

Fig. 5

## INTERNATIONAL SEARCH REPORT

| | International application No. |
|---|---|
| | PCT/JP2014/080602 |

A. CLASSIFICATION OF SUBJECT MATTER

$C04B35/101$(2006.01)i, $C04B35/599$(2006.01)i, $C21B7/06$(2006.01)i, $F27D1/00$(2006.01)i

According to International Patent Classification (IPC) or to both national classification and IPC

B. FIELDS SEARCHED

Minimum documentation searched (classification system followed by classification symbols)
C04B35/101, C04B35/599, C21B7/06, F27D1/00

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y | JP 6-502138 A (Savoie Refractaires),<br>10 March 1994 (10.03.1994),<br>claims; page 2, lower right column, lines 5 to 16; tables 1, 2<br>& US 5215947 A       & EP 480831 A1<br>& WO 1992/006934 A1    & DE 69105693 C<br>& FR 2667862 A       & AT 115105 E<br>& ES 2067895 T       & AU 8742691 A<br>& ZA 9108065 A       & KR 10-0139420 B | 1-3 |
| Y | JP 2002-356378 A (Krosaki Harima Corp.),<br>13 December 2000 (13.12.2000),<br>claims; paragraph [0004]<br>(Family: none) | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 February 2015 (05.02.15) | 17 February 2015 (17.02.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

**INTERNATIONAL SEARCH REPORT**

International application No.

PCT/JP2014/080602

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 5249948 B2  (Krosaki Harima Corp.), 19 April 2013 (19.04.2013), claims; paragraphs [0001], [0051]; table 1, comparative example 1 & WO 2009/072652 A1     & TW 200938509 A | 1-3 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6502140 A
- JP 3212600 B
- JP 2009242122 A